# EUROPEAN PATENT SPECIFICATION

(11) **EP 3 519 082 B1**
(45) Date of publication and mention of the grant of the patent: **21.10.2020**
(21) Application number: 17780685.8
(22) Date of filing: 28.09.2017
(51) Int. Cl.: B01D 53/14, B01D 53/92, B01D 21/26, B01D 47/06

(54) **METHOD FOR CLEANING LIQUID EFFLUENTS OF A WET SCRUBBER TREATING EXHAUST FUMES EMITTED BY A DIESEL ENGINE**
VERFAHREN ZUR REINIGUNG VON ABWÄSSERN AUS EINEM NASSWÄSCHER ZUR BEHANDLUNG VON ABGASEN AUS EINEM DIESELMOTOR
PROCÉDÉ DE NETTOYAGE D'EFFLUENTS LIQUIDES D'UN LAVEUR PAR VOIE HUMIDE TRAITANT LES FUMÉES D'ÉCHAPPEMENT ÉMISES PAR UN MOTEUR DIESEL

(30) Priority: 29.09.2016 FR 1659323
(43) Date of publication of application: 07.08.2019
(73) Proprietor: LAB SA, 69007 Lyon (FR)
(72) Inventor: SIRET, Bernard, 69200 Venissieux (FR); TABARIES, Frank, 83430 Saint Mandrier Sur Mer (FR)
(74) Representative: Lavoix
(86) International application number: PCT/EP2017/074699
(87) International publication number: WO 2018/060370

(56) References cited:
- EP-A1- 1 889 812
- EP-A1- 2 862 608
- WO-A1-2004/067926
- CN-U- 204 522 757
- FR-A1- 2 799 388

## Description

The present invention concerns a method to clean liquid effluents from a wet scrubber treating exhaust fumes emitted by a diesel engine, in particular exhaust fumes emitted by a diesel engine of a seagoing ship.

Seagoing ships, whether ferries or other ships, mostly use fuel oil as fuel for the diesel engines ensuring the propelling thereof. This fuel contains up to 5 % by weight of sulphur, most often between 0.5 and 3.5 % by weight. During the combustion process in these engines, this sulphur is converted to sulphur dioxide (SO₂). As a result, the exhaust fumes of these engines are acid and harmful. It is therefore necessary for ships to integrate means for reducing sulphur dioxide emissions from these exhausts before they are discharged into the atmosphere, unless a very low sulphur content fuel is used that is much costlier however.

The most frequently proposed technology for on-board capturing of the sulphur dioxide contained in the exhaust fumes is to scrub these fumes with seawater. This technique is implemented by a scrubber using the alkalinity of seawater to neutralise the sulphur dioxide, generally without having recourse to an additional neutralising reagent. EP 1 889 812 provides a detailed example of this technique. The sulphur is transferred to the seawater scrubbing liquid circulating in the scrubber, and is concentrated in the liquid circuit of the scrubber. Purging is required to discharge the sulphur: this purge is either formed of the majority portion of the liquids fed into the scrubber which then operates in an open loop configuration whereby the effluents leaving the scrubber are not recycled back to the scrubber, or it is formed of a small fraction of the liquids fed into the scrubber which then operates in a closed loop whereby most of the effluent leaving the scrubber is recycled back to the scrubber, less than 5 % of this effluent for example being evacuated. Whether the scrubber operates in open loop or closed loop, the sulphur initially in oxidation state (+4) is oxidised in the scrubber or in the ancillaries thereof, so that only a flow of sulfate in which the sulphur is in oxidation state (+6) is discharged into the environment, this discharge having no impact on the environment.

However, combustion inside a diesel engine also generates organic compounds including oils, soot, tar and other aromatic molecules. These various organic compounds are toxic and potentially carcinogenic. These substances in the fumes are emitted in greater concentration during engine start-up and switch-off phases, and in addition they are all the more concentrated the lesser the purging of the liquids circulating in the scrubber. Organic compounds are lightweight and may end up by forming oil sheen or iridescent films if the scrubber effluent is discharged non-treated.

It is evidently possible to remove the organic compounds by conventional filtering, e.g. on a bed of activated carbon. However, this solution requires low filtration velocities in the order of a few centimetres/second which, having regard to the size of the flow to be treated by filtration, would lead to filtering installations of very large size and therefore unsuitable for ships.

Removing organic compounds by decanting is also theoretically possible, as lighter aromatic compounds have a tendency to separate and rise to the surface since they have lower density than water, this applying *a fortiori* to seawater. However, said decanting cannot be practically envisaged on a ship, again having regard to the flows to be treated.

Adsorption on solids added to the liquids circulating in the scrubber is also possible, but comes up against a prohibitive difficulty. The contact time between these solids and the liquids to be treated is very short on account of the large flows to be treated and having regard to the allowable size of the installation. It is therefore compulsory to use very reactive solids such as activated carbon. However, activated carbon has a low difference in density compared with water and even more so with seawater, which means that just efficient solid-liquid separation alone would require recourse to a filter or centrifuge. However, as already indicated, recourse to a filter necessitates very slow filtration velocities. As for a centrifuge, this rotating machine is costly, requires maintenance and is difficult to use on a ship.

WO 2004/067926 A1 discloses a method for cleaning liquid effluents from a wet scrubber treating exhaust fumes emitted by a diesel engine, wherein the effluents to be cleaned, on leaving the scrubber, are sent to a solid-liquid separator where the effluents are separated into a clear fraction.

It is the objective of the present invention to propose a method which allows simple, compact and economical treatment of organic pollutants contained in the liquids discharged by a scrubber treating exhausts emitted by a diesel engine, in particular on board a ship.

For this purpose, the subject of the invention is a method for cleaning liquid effluents of a wet scrubber treating exhausts emitted by a diesel engine, such as defined in claim 1.

Therefore, one of the ideas at the base of the invention is to benefit from the superior ability of activated carbon to capture organic compounds by adsorption in the scrubber, whilst making this activated carbon sufficiently heavy so that it can be efficiently and easily separated from the remainder of the liquid effluents leaving the scrubber. According to the invention, the activated carbon, in adapted proportions, is associated with cement in the form of solid particles of suitable particle size. The invention therefore allows the astute imparting to these solid particles of a density that is much higher than that of conventional adsorbents i.e. clays or activated carbons, whilst maintaining a large specific surface area for these solid particles: this large specific surface area guarantees efficient capturing of the organic components when the solid particles circulate in the liquid circuit of the scrubber, whilst at the same time the bulk density of the solid particles substantially facilitates the action of a solid-liquid separator towards which the effluents leaving the scrubber are directed. The invention advantageously makes it possible to use hydrocyclones as solid-liquid separator, although the recourse to said hydrocyclones is associated with technical preconceived opinion according to which, on account of their limited separating power, these hydrocyclones do not allow efficient separating of conventional adsorbents having density that is too low compared with that of water and all the more so compared with that of seawater.

Additional advantageous characteristics of the method of the invention are specified in the dependent claims.

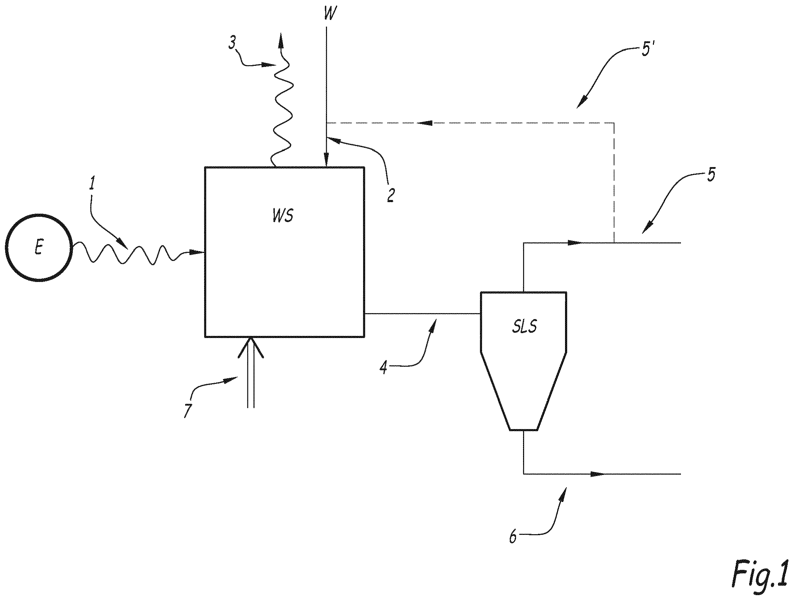

The invention will be better understood by reading the following description given solely as an example and with reference to the drawings in which Figure 1 is a schematic of an installation implementing a cleaning method conforming to the invention.

Figure 1 illustrates an installation allowing the treatment of exhaust fumes 1 emitted by a diesel engine E. According to one preferred but nonlimiting context of use, the engine E ensures the propelling of a seagoing ship having the installation on board. At all events, the engine E uses sulphur-containing fuel, fuel oil in particular, with the result that the fumes 1 in addition to the majority components of carbon gas (CO₂), water vapour (H₂O), nitrogen (N₂) and oxygen (O₂), also contain sulphur oxides, in particular sulphur dioxide (SO₂). The fumes 1 also contain nitrogen oxides (NOₓ), and organic compounds generated by combustion inside the engine E. These organic compounds include *inter alia* soot, tar, oils in particular in aerosol form, aromatic hydrocarbon compounds such as PAHs, aromatic organochlorine compounds such as PCBs, dioxins and furans such as PCDD/Fs, and other mineral compounds.

The installation comprises two functional units, namely a wet scrubber WS which treats the fumes 1 to remove pollutants therefrom, and a solid-liquid separator SLS which treats the liquid effluents of the scrubber WS.

The scrubber WS is of technology known *per se*: it includes a scrubbing tower and associated accessories particularly including pumps, vessels, storage tanks, cladding and piping and optionally heat exchangers. Irrespective of the design of the scrubber WS, the fumes 1 and a scrubbing liquid 2 are fed into this scrubber WS: by contacting the fumes 1 with the scrubbing liquid 2, the various pollutants in the fumes are removed from the latter being captured by the scrubbing liquid. The fumes leaving the scrubber WS are therefore cleaned, i.e. purified, and at the outlet of the scrubber WS, they form a flow 3 discharged into the atmosphere. The liquid effluents 4, on leaving the scrubber 4, are directed to the solid-liquid separator SLS.

The scrubbing liquid 2 is generally chiefly composed of water which, optionally, can be mixed with desulfurizing reagents such as sodium hydroxide or magnesia. If the installation is on board a ship, the scrubbing liquid 2 contains seawater. In practice, when the scrubber WS operates in open loop, the scrubbing liquid 2 is essentially even fully composed of fresh water W, optionally fresh seawater, whilst when the scrubber WS has closed loop operation the scrubbing liquid 2 is composed of a mixture of fresh water W, optionally fresh seawater, and brine derived from the solid-liquid separator SLS, as explained below. It is to be noted that part of the scrubbing liquid 2 can be obtained by condensing water contained in the fumes 1.

The effluents 4 contain the pollutants emitted by the engine E in the fumes 1 and captured by the scrubber WS. Some of these pollutants result from the capturing of sulphur oxides and nitrogen oxides contained in the fumes, these oxides being found in the effluents 4 in the form *inter alia* of sulfates and chlorides that are more or less concentrated depending on whether the scrubber WS operates in open loop or closed loop. Other pollutants contained in the effluents 4 are particle elements resulting from capture of the organic compounds contained in the fumes 1 and having a concentration in the effluents 4 in the order of 1 µg/l to 1 mg/l depending on species, but may be higher in transitory operating phases of the engine E, in particular during engine start-up and switch-off phases. The effluents 4 may also contain solids that were deliberately added to the scrubber WS, such as oxidation catalysts for example.

The solid-liquid separator SLS is of technology known *per se*: in practice, it includes items of separating equipment forming a single unit or distributed over several groups arranged in series or in parallel. These arrangements are known *per se.* According to one advantageous embodiment, the relevance of which will become apparent below, the solid-liquid separator SLS is formed of a hydrocyclone or several hydrocyclones mounted in cascade. As a variant, the solid-liquid separator includes a centrifuge optionally associated with other separating equipment.

Irrespective of the design of the solid-liquid separator SLS, it ensures separation between the liquid constituents and solid constituents of the effluents 4, by dividing these effluents 4 into a clear fraction 5 and a sludge 6 formed of liquids and elements in suspension causing turbidity of these liquids. The sludge 6 is entirely evacuated from the installation and is released or else stored for suitable subsequent treatment. The clear fraction 5 can be either fully evacuated from the installation or at least partly recycled back to the scrubber WS in the form of a flow 5' which, at the inlet to the scrubber WS, forms part of the scrubbing liquid 2. In practice, when the scrubber WS operates in open loop, the entirety of the clear fraction 5 is evacuated whilst when the scrubber WS operates in closed loop the flow 5' is formed of most of the clear fraction 5, for example more than 95 %.

According to the invention, solid particles 7 are added, directly or indirectly, to the scrubber WS. These solid particles 7 are chiefly formed of a mixture of cement and activated carbon. These solid particles 7 therefore contain between 25 % and 60 % by weight of cement and between 25 % and 75 % by weight of activated carbon. In addition, the solid particles 7 have a mean size of between 30 µm and 500 µm, preferably between 50 µm and 150 µm, and more preferably between 50 µm and 100 µm, the aforementioned mean size usually being called « d50 » and being defined as the value such that 50 % by weight of the solid particles have a smaller size than this value. In other words, the mean size known as « d50 » is the size of the solid particles 7 such that there is the same weight of larger solid particles as of smaller solid particles.

For example, the solid particles 7 are prepared by mixing in water cement and activated carbon, particularly powdered, and optionally other compounds. This mixture sets, and after being left to dry it is fragmented e.g. by crushing to the desired particle size.

According to one provision, facilitating the use of the solid particles 7, these are added to the scrubber WS in the form of a suspension in an aqueous base, this suspension possibly containing other constituents than the solid particles 7: in nonlimiting manner, these other constituents are solids having catalytic properties for oxidation of sulfites to sulfates and/or surfactants and/or metal salts.

Because the solid particles 7 have a cement portion, the density of the solid particles 7 is much higher than that of conventional adsorbents such as clays or activated carbons : in the effluents 4, the solid particles 7 therefore have a bulk density that is sufficiently high for efficient separation of the solid particles 7 by the solid-liquid separator SLS so that they are found in the sludge 6, even if this separator is composed of one or more hydrocyclones i.e. separation equipment having a limited cut-off threshold compared with other more sophisticated separation devices such as a centrifuge. At the same time, because the solid particles 7 have a activated carbon portion, the solid particles 7 efficiently capture the organic compounds taken up by the scrubbing liquid 2 when it circulates in the scrubber WS: the solid particles 7 therefore efficiently clean the effluents 4 by removing these organic compounds through capturing thereof by adsorption on the activated carbon of the solid particles 7. It will be understood that, for the solid particles 7, an increase in the activated carbon content will better promote cleaning of the effluents 4, but the higher the activated carbon content in the solid particles 7, the lower the bulk density of these particles in the effluents, and the more difficult the subsequent separation thereof by the solid-liquid separator SLS. In addition, if the content of activated carbon exceeds 75 % by weight, the resistance of the solid particles 7 becomes poor and they disintegrate too easily.

Also, it is important that the solid particles 7 should not be too fine i.e. their mean « d50 »size be less than 30 µm, otherwise their separation from the remainder of the effluents 4 by the liquid-solid separator SLS would become too inefficient, nor must they be too large with a « d50 » mean size greater than 500 µm, otherwise the specific surface area of the solid particles 7, expressed as m²/g, would become too small and the desired capturing of the organic compounds in the effluents 4 would become inefficient..

It will be noted that it is not necessary for the organic compounds to be removed from the effluents 4 with a very high cleaning rate e.g. higher than 90 %, even if this would be appreciable. The respective concentrations of the pollutants in the effluents 4, in particular the concentration of organic compounds, are most often sufficiently low meaning that a lower cleaning rate is sufficient. In addition, factors other than the activated carbon content in the solid particles 7 have an impact on cleaning rate: these other factors *inter alia* are the contact time which reduces cleaning rate when it is increased, and temperature which reduces cleaning rate when it is increased, by having an unfavourable impact on the adsorption isotherm. In practice, the contacting of the solid particles 7 and liquids circulating in the scrubber WS is preferably conducted at between 15 and 60°C, more preferably between 20 and 40°C.

According to one additional characteristic, the concentration of the solid particles 7 in the effluents 4 is preferably between 10 mg/l and 1000 mg/l, the value of this concentration being directly dependent upon the quantity of solid particles 7 placed in the scrubber WS. With a concentration lower than 10 mg/l, there would be an insufficient amount of activated carbon in the scrubber WS. A concentration higher than 1 g/l would give rise to problems of erosion or abrasion in the installation.

### EXPERIMENTATION:

Five samples of solid particles were prepared:
- sample A contains 100 % cement;
- sample B contains 100 % activated carbon;
- sample C contains 75 % activated carbon and 25 % cement;
- sample D contains 50 % activated carbon, 30 % cement and 20 % bentonite; and
- sample E contains 50 % activated carbon and 50% cement.

Each of the five samples was placed in the scrubber WS whilst, at the same time, predetermined organic molecules used as tracer were artificially fed into the scrubber WS. The Table below groups together the data on this experimentation:

| Sample | Mean size «d50» (in µm) of the solid particles of the sample | Cleaning rate (in %) of the tracer in the effluents of the scrubber WS | Possible separation of the solid particles using hydrocyclone(s) |
|---|---|---|---|
| A | 40 | 1 | Yes |
| B | 40 | 89 to 99 | No |
| C | 100 to 315 | 71 | Yes |
| D | 100 to 310 | 43 | Yes |
| E | 64 to 100 | 60 | Yes |

It was found that sample B, solely composed of activated carbon, gives excellent performance from the viewpoint of cleaning of the organic compounds, without it being possible however for the solid particles of this sample B to be separated by the solid-liquid separator SLS. On the other hand, samples C, D and E, having solid particles meeting the specifications previously given for the solid particles 7, combine satisfactory cleaning of the organic compounds in the effluents 4 with efficient separation by the separator SLS.

## Claims

1. Method for cleaning liquid effluents from a wet scrubber treating exhaust fumes emitted by a diesel engine, wherein:
- solid particles (7), containing between 25 and 75 % by weight of activated carbon and between 25 and 60 % by weight of cement and having a mean size of between 30 µm and 500 µm, are placed in the scrubber (WS), and
- the effluents to be cleaned (4), on leaving the scrubber (WS), are sent to a solid-liquid separator (SLS) where the effluents are separated into a clear fraction (5) and a sludge (6) containing the solid particles (7).

2. The method according to claim 1, wherein the solid particles (7) placed in the scrubber (WS) have a mean size of between 50 µm and 150 µm.

3. The method according to claim 1, wherein the solid particles (7) placed in the scrubber (WS) have a mean size of between 50 µm and 100 µm.

4. The method according to any one of the claims 1 to 3, wherein the solid-liquid separator (SLS) is composed of one or more hydrocyclones.

5. The method according to any one of the claims 1 to 3, wherein the solid-liquid separator (SLS) comprises a centrifuge.

6. The method according to any of the preceding claims, wherein the quantity of solid particles (7) placed in the scrubber (WS) is such that the concentration of these solid particles in the effluents (4) sent to the solid-liquid separator (SLS) is between 10 mg/l and 1000 µmg/l.

7. The method according to any of the preceding claims, wherein the solid particles (7) are placed in the scrubber (WS) in the form of a suspension in an aqueous base.

8. The method according to any of the preceding claims, wherein the clear fraction (5) is evacuated when the scrubber (WS) operates in an open loop, and is at least partly recycled back to the scrubber when the scrubber operates in a closed loop.

9. The method according to any of the preceding claims, wherein the scrubber (WS) is operated with a scrubbing liquid (2) containing seawater.

10. The method according to any of the preceding claims, wherein the method is implemented on board a seagoing ship.

## Patentansprüche

1. Verfahren zur Reinigung von Abwässern aus einem Nasswäscher zur Behandlung von Abgasen, die von einem Dieselmotor emittiert werden, wobei:
- Feststoffteilchen (7), die zwischen 25 und 75 Gewichts% Aktivkohle und zwischen 25 und 60 Gewichts% Zement enthalten und eine mittlere Größe von 30 µm bis 500 µm aufweisen, im Nasswäscher (WS) angeordnet werden, und
- die zu reinigenden Abwässer (4) bei Verlassen des Nasswäschers (WS) zu einer Fest-Flüssig-Trennvorrichtung (SLS) gesendet werden, wo die Abwässer in einen klaren Teil (5) und einen Schlamm (6) mit den Feststoffteilchen (7) getrennt werden.

2. Verfahren nach Anspruch 1, wobei die im Nasswäscher (WS) angeordneten Feststoffteilchen (7) eine mittlere Größe von 50 µm bis 150 µm aufweisen.

3. Verfahren nach Anspruch 1, wobei die im Nasswäscher (WS) angeordneten Feststoffteilchen (7) eine mittlere Größe von 50 µm bis 100 µm aufweisen.

4. Verfahren nach einem die Ansprüche 1 bis 3, wobei die Fest-Flüssig-Trennvorrichtung (SLS) aus einem oder mehreren Hydrozyklonen besteht.

5. Verfahren nach einem der Ansprüche 1 oder 3, wobei die Fest-Flüssig-Trennvorrichtung (SLS) eine Zentrifuge umfasst.

6. Verfahren nach einem der vorhergehenden Ansprüche, wobei die Menge der im Nasswäscher (WS) angeordneten Feststoffteilchen (7) derart ist, dass die Konzentration dieser Feststoffteilchen in den Abwässern (4), die zur Fest-Flüssig-Trennvorrichtung (SLS) gesendet werden, zwischen 10 mg/l und 1000 mg/l liegt.

7. Verfahren nach einem der vorhergehenden Ansprüche, wobei die Feststoffteilchen (7) in Form einer Suspension in einer wässrigen Basis im Nasswäscher (WS) angeordnet werden.

8. Verfahren nach einem der vorhergehenden Ansprüche, wobei der klare Teil (5) entleert wird, wenn der Nasswäscher (WS) in einer offenen Schleife arbeitet, und wenigstens teilweise in den Nasswäscher zurückgeführt wird, wenn der Nasswäscher in einer geschlossenen Schleife arbeitet.

9. Verfahren nach einem der vorhergehenden Ansprüche, wobei der Nasswäscher (WS) mit einer Waschflüssigkeit (2) betrieben wird, die Meereswasser enthält.

10. Verfahren nach einem der vorhergehenden Ansprüche, wobei das Verfahren an Bord eines Seeschiffs implementiert wird.

## Revendications

1. Procédé d'épuration des effluents liquides d'un laveur humide de traitement de fumées d'échappement émises par un moteur diesel, dans lequel :
- des particules solides (7), qui contiennent entre 25 et 75% en masse de charbon actif et entre 25 et 60% en masse de ciment et qui ont une taille moyenne comprise entre 30 µm et 500 µm, sont introduites au laveur (WS), et
- les effluents à épurer (4) sont, en sortie du laveur (WS), envoyés à un séparateur solide-liquide (SLS) dans lequel les effluents sont séparés en une fraction claire (5) et une boue (6) contenant les particules solides (7).

2. Procédé d'épuration suivant la revendication 1, dans lequel les particules solides (7) introduites au laveur (WS) ont une taille moyenne comprise entre 50 µm et 150 µm.

3. Procédé d'épuration suivant la revendication 1, dans lequel les particules solides (7) introduites au laveur (WS) ont une taille moyenne comprise entre 50 µm et 100 µm.

4. Procédé d'épuration suivant l'une des revendications 1 à 3, dans lequel le séparateur solide-liquide (SLS) est constitué d'un ou de plusieurs hydrocyclones.

5. Procédé d'épuration suivant l'une des revendications 1 à 3, dans lequel le séparateur solide-liquide (SLS) comprend une centrifugeuse.

6. Procédé d'épuration suivant l'une quelconque des revendications précédentes, dans lequel la quantité des particules solides (7) introduites au laveur (WS) est telle que la concentration de ces particules solides dans les effluents (4) envoyés au séparateur solide-liquide (SLS) est comprise entre 10 mg/l et 1000 mg/l.

7. Procédé d'épuration suivant l'une quelconque des revendications précédentes, dans lequel les particules solides (7) sont introduites au laveur (WS) sous forme d'une suspension dans une base aqueuse.

8. Procédé d'épuration suivant l'une quelconque des revendications précédentes, dans lequel la fraction claire (5) est évacuée lorsque le laveur (WS) opère en boucle ouverte et est au moins partiellement recyclée au laveur lorsque le laveur opère en boucle fermée.

9. Procédé d'épuration suivant l'une quelconque des revendications précédentes, dans lequel le laveur (WS) opère avec un liquide de lavage (2) contenant de l'eau de mer.

10. Procédé d'épuration suivant l'une quelconque des revendications précédentes, dans lequel on met en œuvre le procédé d'épuration à bord d'un navire marin.
